# EUROPEAN PATENT SPECIFICATION

(11) **EP 3 312 433 B1**
(45) Date of publication and mention of the grant of the patent: **31.07.2024**
(21) Application number: 17174662.1
(22) Date of filing: 07.06.2017
(51) Int. Cl.: F04D 29/54, F04D 19/00, F04D 17/02

(54) **AIR PURIFIER AND WIND TUNNEL THEREOF**
LUFTREINIGER UND WINDKANAL DAMIT
PURIFICATEUR D'AIR ET DISPOSITIF DE SOUFFLERIE ASSOCIÉ

(30) Priority: 24.10.2016 CN 201610939658
(43) Date of publication of application: 25.04.2018
(73) Proprietor: Beijing Xiaomi Mobile Software Co., Ltd., Beijing 100085 (CN); Beijing Smartmi Technology Co., Ltd., Beijing 100085 (CN)
(72) Inventor: SU, Jun, BEIJING, 100085 (CN); WANG, Yi, BEIJING, 100085 (CN); YU, Zhuoli, BEIJING, 100085 (CN)
(74) Representative: Cabinet Beau de Loménie

(56) References cited:
- EP-A2- 2 336 575
- WO-A1-85/02889
- CN-A- 101 566 165
- CN-A- 103 574 777
- CN-U- 204 447 560
- JP-A- S60 251 915

## Description

### TECHNICAL FIELD

The present disclosure generally relates to air purifier techniques, and more particularly to an air purifier and a wind tunnel thereof.

### BACKGROUND

An air purifier can purify surrounding air to effectively improve indoor air quality. The air purifier may include a purifier and a wind tunnel. The purifier may filter out particles and germs in the air by filter element filtering, high voltage electrostatic adsorption, biodegradation and the like. The wind tunnel may cause air to flow, such that the surrounding air is drawn into the purifier and the purified air is released.

In the related art, the wind tunnel typically has a cylinder structure. A turbo fan and an axial fan are arranged respectively at a wind inlet and a wind outlet of the wind tunnel. The turbo fan circumferentially blows the purified air to generate an air flow which may rise spirally along an inner wall of the wind tunnel and then may be upwardly and axially accelerated by the axial fan.

However, since air flow generated by the turbo fan is blew towards the axial fan along the inner wall of the wind tunnel, the air flow can be accelerated by merely peripheral portions of blades of the axial fan, which not only wastes resources of the axial fan but also influences the overall purifying effectiveness of the air purifier.

WO 8502889 (A1) discloses that a rotary bladed impeller is disposed at the transition between an entrance passageway to an enlarged diameter diffusion duct surrounding the impeller. An annular structure is arranged upstream of the blade tips and projecting inwardly of the duct to define the entrance passageway to guide fluid flowing therethrough within the rotary path of the blade tips. The duct and structure partly define an annular space extending past the blade tips within the duct within which is formed a blade tip driven annular vortex turning so as to diffuse the flow passing through the impeller. The annular structure may on its upstream surface be formed to serve as an inlet duct to the impeller without the need for extended inlet ducting, and the diffuser duct may be of other than circular cross-section, and also may be of short length e.g. between and 50 % of the swept diameter of the impeller.

EP 2336575 (A2) discloses a counter-rotating axial flow fan with reduced noise at the target operating point achieved without modifying a front impeller, a rear impeller, or a middle stationary portion is provided. An annular rib including a projecting surface for generating turbulent flow is formed on an inner wall portion of a casing at a position off from the middle stationary portion to a side of the rear impeller, the projecting surface extending radially inwardly of the inner wall portion and extending continuously in the circumferential direction of the inner wall portion. A fluid striking the projecting surface for generating turbulent flow is partially disturbed to form a turbulent flow before entering an area in which the rear impeller is provided. The turbulent flow suppresses flow separation of a fluid flowing along the surfaces of rear blades of the rear impeller from the surfaces of the rear blades.

CN 204447560 (U) discloses an air purifier. The air purifier comprises a shell, an air inlet, an air outlet, an air duct structure and a filtering device, wherein the air inlet and the air outlet are formed in the shell; the air duct structure is arranged in the shell and is used for communicating the air inlet with the air outlet; the filtering device is used for filtering air. The air purifier also comprises a first fan and a second fan, wherein the first fan is used for sucking air into the shell from the air inlet; the second fan is used for exhausting air from the air outlet. The air purifier has the beneficial effects that the air purifier has a simple structure; by arranging the air duct structure between the two fans and matching the two fans, air flows in an upward swirling manner and is finally exhausted from the air outlet formed in the upper part of the shell; the air purifier sucks air from the lower part and exhausts filtered air from the upper part of the shell, so that indoor air is effectively circulated, thus achieving a better filtration effect.

CN 101566165 (A) discloses a synchronous after flow ventilating compressor, which comprises a shell, an air inlet of the shell, an outlet of the shell, an impeller, impeller blades, an airflow channel inside the impeller, a blisk of the impeller. The compressor is characterized in that the axial back sides of the impeller blades gradually axially tilt along the radial direction of the impeller from front to back towards the axial direction of the impeller; the axial back side of the impeller gradually axially tilts along the radial direction of the impeller from front to back towards the axial direction of the impeller; and gradually and axially tilting part of the axial direction back side of the impeller is provided with an axial air outlet of the impeller. Compared with the prior art, the compressor has the advantages of simple structure, small volume, few materials, light weight, convenient transportation and mounting, resources, saving good pressurized effect, high efficiency, energy saving, low noise, favorability for environment protection and the like.

CN 103574777(A) relates to a cabinet type air conditioner, in particular to an air supply structure inside the cabinet type air conditioner. The cabinet type air conditioner comprises a cabinet body, a heat exchanger, an air exhaust device and a motor for driving the air exhaust device, wherein the heat exchanger and the air exhaust device are arranged in the cabinet body; an air inlet and an air outlet are formed in the positions, corresponding to the heat exchanger and the air exhaust device respectively, of the cabinet body; a filter screen is arranged between the heat exchanger and the air inlet; the heat exchanger is columnar and longitudinally mounted in the cabinet body; the air exhaust device and the heat exchanger are placed in the coaxial line; the air inlet is formed in the side edge of the heat exchanger; and one end of the air exhaust device is close to the heat exchanger, and the other end of the air exhaust device corresponds to the air outlet. With the adoption of the cabinet type air conditioner, the size of the air conditioner can be reduced, the modelling expansibility of the cabinet type air conditioner is improved, and the heat exchange effect is enhanced.

### SUMMARY

The invention is set out in the appended set of claims.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.

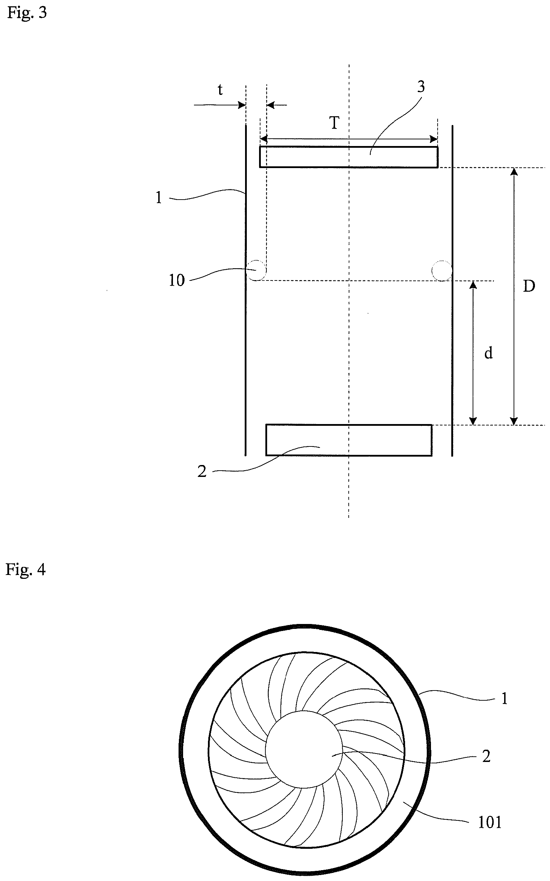

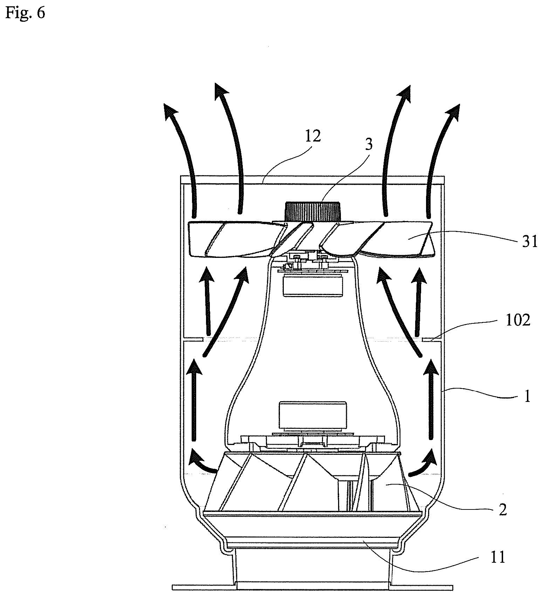

The following embodiments corresponding Fig.4, Fig, 5 and Fig.6 are not part of the invention and are present for illustration purposes only.
Fig. 1 is a schematic diagram of a wind tunnel for an air purifier in the related art;
Fig. 2 is a schematic diagram of a wind tunnel for an air purifier according to an exemplary embodiment;
Fig. 3 is a schematic diagram of specification of a wind tunnel for an air purifier according to an exemplary embodiment;
Fig. 4 is a top view of a wind tunnel for an air purifier according to an exemplary embodiment not being part of the present invention;
Fig. 5 is a top view of another wind tunnel for an air purifier according to an exemplary embodiment not being part of the present invention;
Fig. 6 is a schematic diagram of a wind tunnel for an air purifier according to an exemplary embodiment not being part of the present invention;
Fig. 7 is a schematic diagram of air-flow spoiling of the wind tunnel shown in Fig. 6;
Fig. 8 is a schematic diagram of another wind tunnel for an air purifier according to an exemplary embodiment;
Fig. 9 is a schematic diagram of air-flow spoiling of the wind tunnel shown in Fig. 8;
Fig. 10 is a schematic diagram of yet another wind tunnel for an air purifier according to a first exemplary embodiment;
Fig. 11 is a schematic diagram of air-flow spoiling of the wind tunnel shown in Fig. 10;
Fig. 12 is a schematic diagram of a wind tunnel for an air purifier according to a second exemplary embodiment;
Fig. 13 is a schematic diagram of air-flow spoiling of the wind tunnel shown in Fig. 12;
Fig. 14 is a schematic diagram of a wind tunnel for another air purifier according to the second exemplary embodiment;
Fig. 15 is a schematic diagram of air-flow spoiling of the wind tunnel shown in Fig. 14; and
Fig. 16 is a schematic diagram of a wind tunnel for yet another air purifier according to the second exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

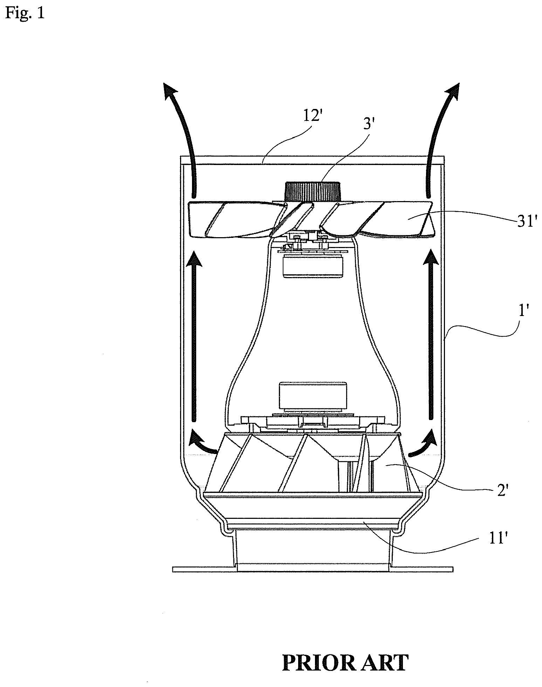

Fig. 1 is a schematic diagram of a wind tunnel for an air purifier in the related art. As shown in Fig. 1, a purifier of the air purifier is omitted in order to show and depict a wind tunnel 1'. The wind tunnel 1' has a cylinder shape substantially. In the air purifier shown in Fig. 1, at bottom of the wind tunnel 1; there is a wind inlet at which a turbo fan 2' is arranged, and at top of the wind tunnel 1; there is a wind outlet at which an axial fan 3' is arranged. In operation, the turbo fan 2' blows air flow towards an inner wall of the wind tunnel 1; such that the air flow rises spirally along the inner wall of the wind tunnel Γ to be blew towards the axial fan 3'.

However, since the air flow rises substantially along the inner wall of the wind tunnel 1', the air flow blew by the turbo fan 2' is accelerated by merely the peripheral portions (i.e., the end portions) of blades 31' of the axial fan 3', and the acceleration on the air flow by middle zones or internal zones of the blades 31' is very limited, which not only wastes rotation resources of the axial fan 3' but also influences the overall purifying effectiveness of the air purifier.

In order to solve the above-mentioned technical problems in the related art, embodiments of the present disclosure improve the wind tunnel 1' for an air purifier. In the following, which will be illustrated in conjunction with embodiments.

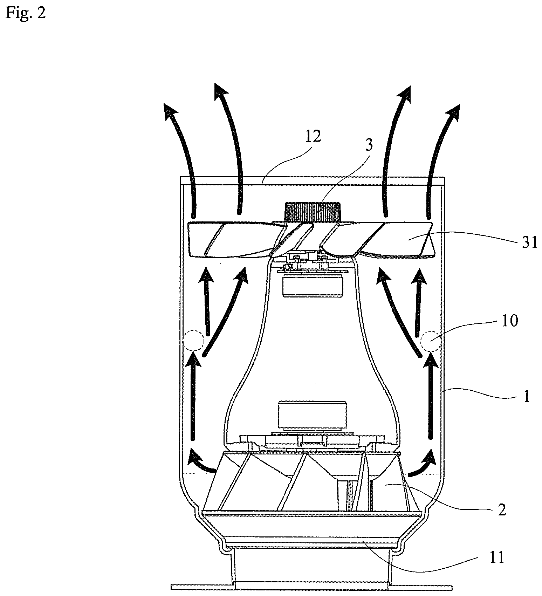

Fig. 2 is a schematic diagram of a wind tunnel for an air purifier according to an exemplary embodiment. As shown in Fig. 2, a wind tunnel 1 in the embodiment of the disclosure includes a turbo fan 2 arranged at a wind inlet 11 of the wind tunnel 1, and an axial fan 3 arranged at a wind outlet 12 of the wind tunnel 1. An air flow generated by the turbo fan 2 is blew towards the axial fan 3 along an inner wall of the wind tunnel 1 and then released from the wind tunnel 1 via the axial fan 3. A flow-spoiler portion 10 is formed on the inner wall of the wind tunnel 1 between the turbo fan 2 and the axial fan 3. The flow-spoiler portion 10 spoils an air flow which is blew towards the axial fan 3 along the inner wall of the wind tunnel 1, so as to make at least a portion of the air flow, when blew towards the axial fan 3, to be away from the inner wall of the wind tunnel 1.

In this embodiment, the flow-spoiler portion 10 formed on an inner wall of the wind tunnel 1, spoils the air flow which may rise spirally along the inner wall of the wind tunnel 1, so as to make at least a portion of the air flow to be away from the inner wall of the wind tunnel 1. Therefore, this portion of the air flow, when going through the axial fan 3, may be more close to and accelerated by middle of blades 31 of the axial fan 3, and the remaining portion of the air flow continues to rise along the inner wall of the wind tunnel 1 and may be accelerated by end portions of the blades 31, so as to make full use of the axial acceleration resources of the axial fan 3. Therefore, in a same condition, as existing wind tunnels, about fan specification, a wind tunnel size, a filter element type and the like, the wind tunnel of the disclosure has a greater wind release capacity, which not only increases the coverage of the purified air, but also strengthens air convection so as to improve indoor air purifying effectiveness and save the power consumption of the air purifier.

In this embodiment, when the wind inlet 11 is arranged at the bottom of the wind tunnel 1 and the wind outlet 12 is arranged at the top of the wind tunnel 1, the flow-spoiler portion 10 may be at a higher position than that of the turbo fan 2, such that the air flow, blew towards the axial fan 3 by the turbo fan 2, before being spoiled by the flow-spoiler portion 10, has proceeded for at least a preset distance along the inner wall of the wind tunnel to reach a preset rate. Therefore, it can avoid that the flow-spoiler portion 10 excessively slows the air flow and in turn decreases the wind release capacity of the air purifier. For example, as shown in Fig. 3, when a distance between the turbo fan 2 and the axial fan 3 is D, a distance between a lowest point of the flow-spoiler portion and the turbo fan 2 may be d, and (1/3)D≤d≤(2/3)D. In an example, d≈(1/2)D. However, the disclosure is not intended to limit thereto.

According to the technical solutions of the embodiments of the disclosure, the flow-spoiler portion 10 may have a plurality of implementations. The implementations of the flow-spoiler portion 10 will be illustrated by way of example.

According to an exemplary embodiment of the disclosure, the flow-spoiler portion 10 includes an inward convex portion formed on the inner wall of the wind tunnel 1. During the air flow generated by the turbo fan 2 rising spirally along the inner wall of the wind tunnel 1, the convex portion may, to a certain extent, block the air flow to disturb a flowing direction of the air flow and thus spoil the air flow, causing the air flow to be away from the inner wall of wind tunnel 1.

In one case, as shown in Fig.4, when the flow-spoiler portion 10 includes a convex portion, the convex portion may have an integral hollow-ring structure 101. Fig. 4 schematically shows a top view of the hollow-ring structure 10 (in the case that the axial fan 3 at the wind outlet is removed).

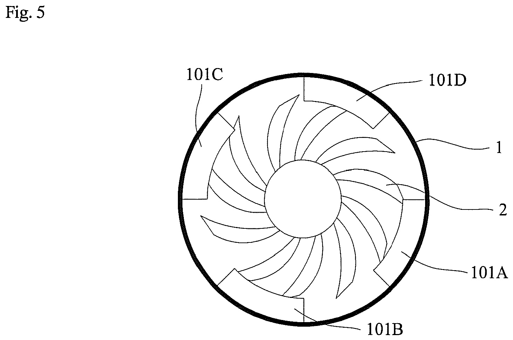

In another case, the flow-spoiler portion 10 may include a plurality of convex portions. As shown in Fig. 5, the flow-spoiler portion 10 may include a convex portion 101A, a convex portion 101B, a convex portion 101C and a convex portion 101D, which may be distributed on the inner wall of the wind tunnel 1 at intervals in a ring shape. Therefore, zones in which the convex portions are arranged spoil the air flow, and zones in which the convex portions are not arranged allow the air flow to pass normally, thus striking a balance between the air-flow spoiling and the air-flow flowing. The convex portions may be distributed uniformly at a same altitude on the inner wall of the wind tunnel 1 and thus may evenly spoil the air flow generated by the turbo fan 2, which helps the air purifier to release purified air evenly towards individual directions in a room, and avoids any purifying "blind corner" or "weak point".

Although the flow-spoiler portion 10 shown in Fig. 5 includes four convex portions, i.e., the convex portion 101A, the convex portion 101B, the convex portion 101C and the convex portion 101D in this example, in fact, the number, the shapes and the arrangement of the convex portions included in the flow-spoiler portion 10 may vary depending on the conditions such as the size of the wind tunnel 1, specification of the turbo fan 2 and specification of the axial fan 3, which the disclosure is not intended to limit.

For the above described flow-spoiler portion 10 including the hollow-ring structure or the plurality of convex portions, a convex portion included in the flow-spoiler portion 10 may have one of the following structures.

In an example which is not part of the invention, the convex portion may have a plate shape, and thus the flow-spoiler portion 10 may include a separation plate 102 as shown in Fig. 6. In the case of the hollow-ring structure 101 as shown in Fig. 4, the separation plate 102 may be a hollow-ring separation plate 102. In the case of the plurality of convex portions shown in Fig. 5, the flow-spoiler portion 10 may include a plurality of separation plates 102 arranged at intervals. It is to be noted that, although the separation plate 102 can spoil the air flow so as to make a portion of the air flow to be away from the inner wall of the wind tunnel 1 and blew towards middle of the blades 31 of the axial fan 3, the separation plate 102, due to having a plane towards the turbo fan 2, has a direct blocking effect on the air flow, causing that the flowing rate of the air flow may be influenced to a certain extent, e.g., the air flow may be slowed to a certain extent.

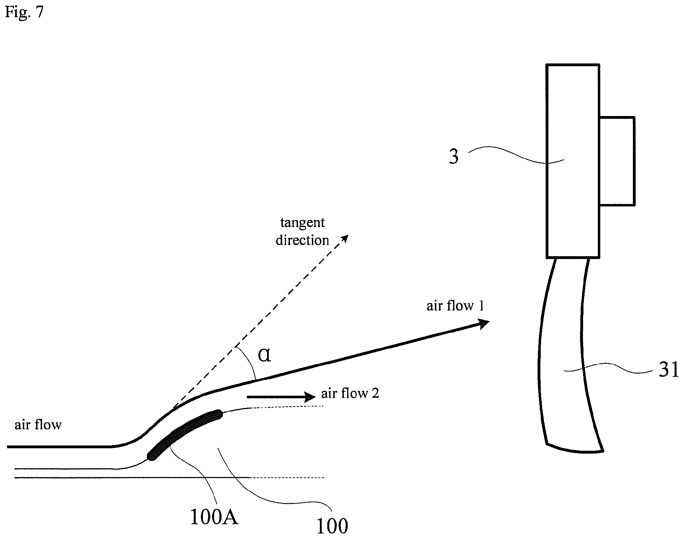

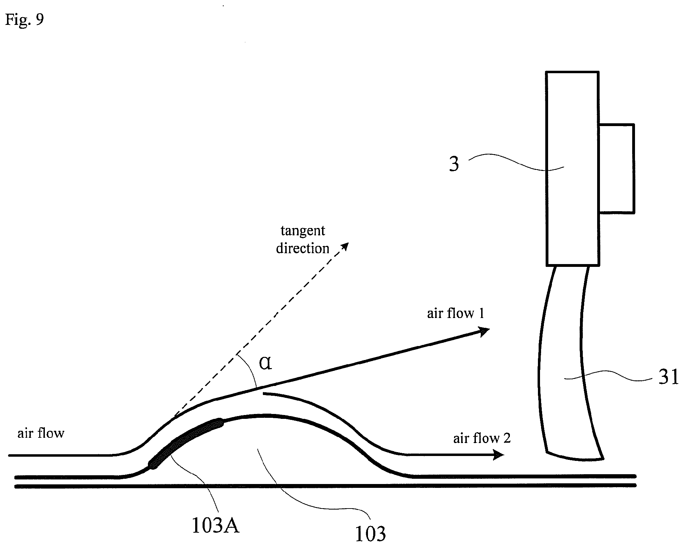

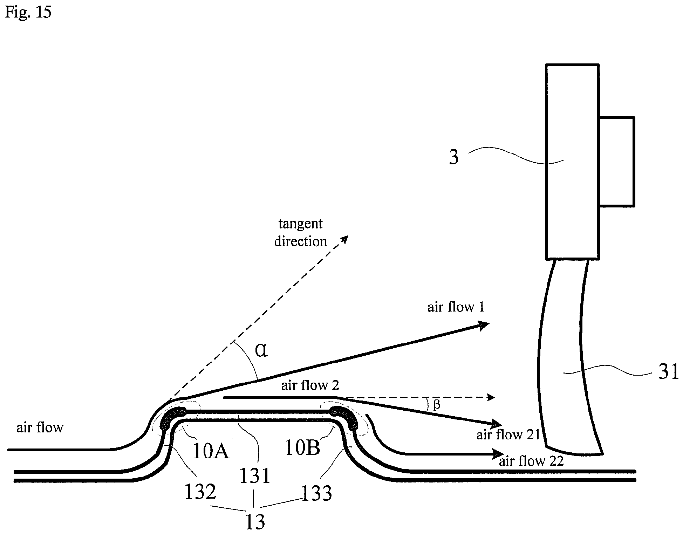

As part of the invention, as shown in Fig. 7, the convex portion has a boss shape. Taking a boss 100 shown in Fig. 7 as an example, the boss 100 includes a windward surface 100A towards the turbo fan 2 (In Fig. 7, the windward surface 100A is highlighted in a thick solid line, which is not intended to indicate that the windward surface 100A is more convex than other portions, and the same is applicable to Fig. 9, Fig. 11, Fig. 13 and Fig. 15). The windward surface 100A is an arc-shaped surface which generates a Coanda Effect when an air flow is blew towards the windward surface 100A, i.e., the air flow will not be bounced along a tangent direction of the windward surface 100A, or rather, the air flow may proceed at least a certain distance along the windward surface 100A, such that a portion of the air flow, namely air flow 1, forms an angle α relative to the tangent direction of the windward surface 100A and is guided towards the middle of the blades 31 of the axial fan 3, while the other portion of the air flow, namely air flow 2, may continue to proceed along the inner wall of the wind tunnel 1, to be blew towards the end portions of the blades 31 of the axial fan 3. In other words, the air flow generated by the turbo fan 2 is dispersed to individual portions of the blades 31 of the axial fan 3, so as to make full use of the acceleration generated from rotation of the blades 31 and thus acquire an greater wind guiding capacity and an improved purifying efficiency. Meanwhile, when the windward surface 100A is an arc-shaped surface, the arc-shaped surface may generate a smaller blocking effect on the air flow than the separation plate 102 as shown in Fig. 6. Therefore, as compared to the separation plate 102, the windward surface 100A of the boss 100 may have a less influence on the flowing rate of the air flow, so as to make full use of the acceleration by the turbo fan 2 on the air flow, resulting in a greater wind guiding capacity in a same condition and an improved air purifying effectiveness of the air purifier.

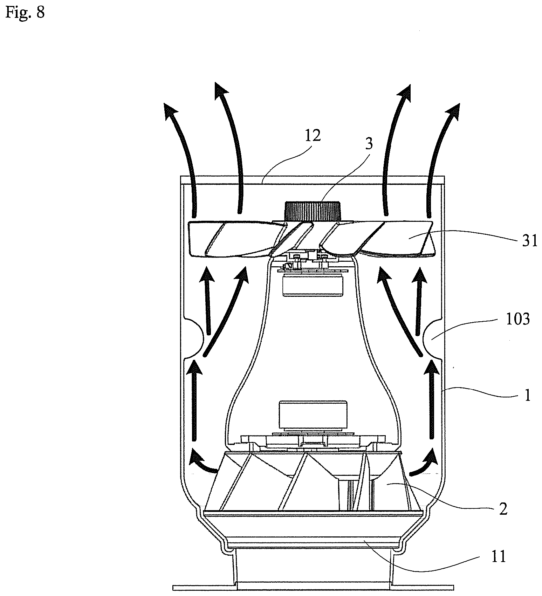

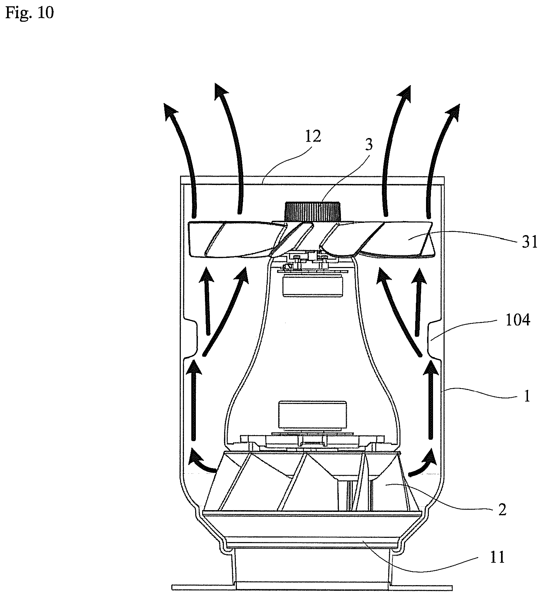

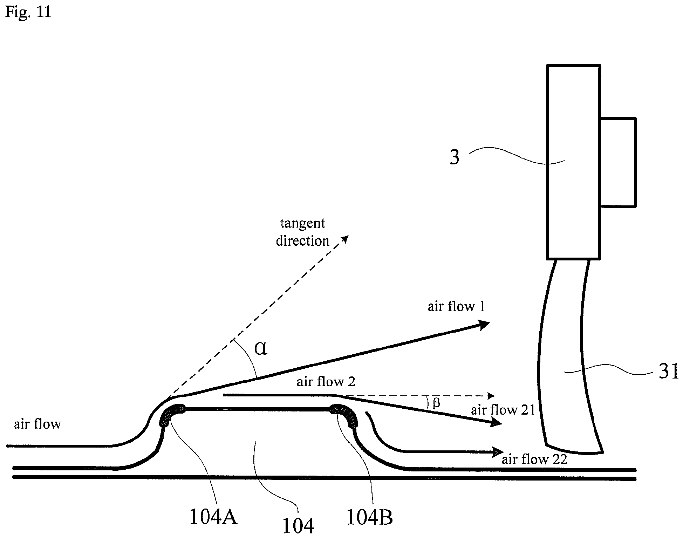

The boss 100 may have a plurality of structures. According to one embodiment, the boss 100 may be a boss 103 with an arc-shaped surface as shown in Fig. 8. Accordingly, in a schematic diagram of air-flow spoiling shown in Fig. 9, the boss 103 with the arc-shaped surface may include a windward surface 103A towards turbo fan 2, and the windward surface 103A may guide the air flow into an air flow 1 and an flow 2 fitted respectively for individual portions of the blades 31 of the axial fan 3, so as to make full use of the acceleration generated by the blades 31. According to another embodiment, the boss 100 may be a boss 104 shown as in Fig. 10. Accordingly, referring to the schematic diagram of the air flow spoiling shown in Fig. 11, the boss 104 includes a first edge 104A close to the turbo fan 2 and a second edge 104B away from the turbo fan 2, each of the first edge 104A and the second edge 104B having an arc-shaped chamfer. Then, the first edge 104A having an arc-shaped chamfer forms a windward surface of the boss 104, and the windward surface guides the air flow into an air flow 1 and an air flow 2. The second edge 104B having an arc-shaped chamfer may also generate the Coanda Effect, such that the air flow 2 is further guided into an air flow 21 and an air flow 22 by the second edge 104B. Therefore, the air flow, after being guided for multiple times by the first edge 104A and the second edge 104B, may be fitted uniformly for individual portions of the blades 31, resulting in a greater wind guiding capacity, a higher purifying effectiveness and an improved purifying effect.

According to a second embodiment of the disclosure, the wind tunnel 1 includes a normal pipe and a contracted pipe which has an inner diameter smaller than that of the normal pipe. The flow-spoiler portion 10 includes a windward surface towards the turbo fan 2, the windward surface being formed in the contracted pipe close to the normal pipe and having an arc-shape so as to properly guide the air flow under the Coanda Effect.

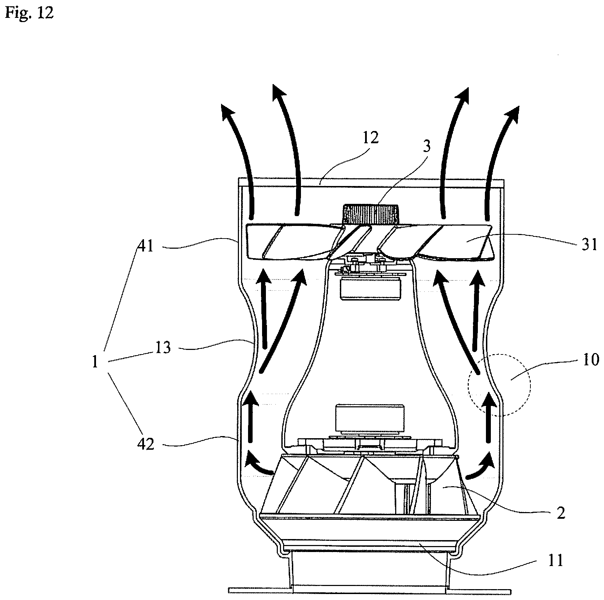

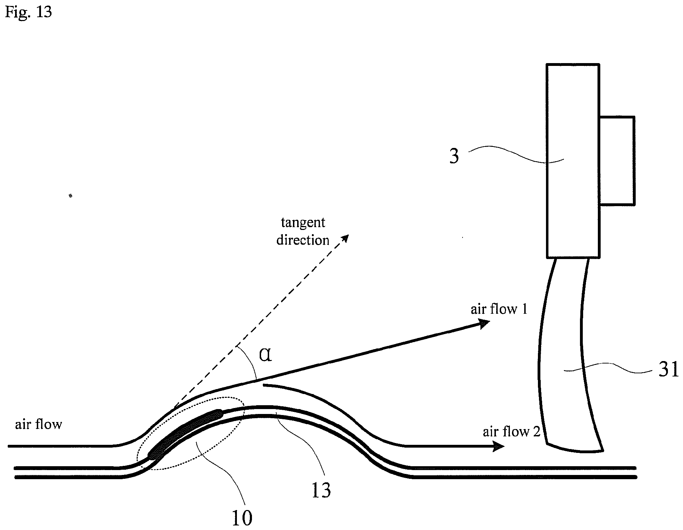

According to an embodiment of the disclosure, the contracted pipe is located between two normal pipes. As shown in Fig. 12, the wind tunnel 1 may include a first normal pipe 41, a second normal pipe 42 and a contracted pipe 13 which is located between the first normal pipe 41 and the second normal pipe 42. In the case that the first normal pipe 41 is closer to the axial fan 3 and the second normal pipe 42 is closer to the turbo fan 2, the flow-spoiler portion 10 includes a windward surface of contracted pipe 13 close to the second normal pipe 42. As shown in Fig. 13, the flow-spoiler portion 10 generates the Coanda Effect on the air flow, so as to guide the air flow into an air flow 1 and an air flow 2 fitted respectively for individual portions of the blades 31.

According to embodiments shown in Fig. 12 to Fig. 13, an inner wall of the contracted pipe 13 has an inward convex arc-shaped surface. Therefore, the contracted pipe 13 shown in Fig. 12 to Fig. 13 may generate a similar flow-spoiler effect as the boss with the arc-shaped surface as shown in Fig. 8 to Fig. 9. The wind tunnel 1 shown in Fig. 8 to Fig. 9 has a uniform outer diameter, and the wind tunnel 1 shown in Fig. 11 to Fig. 12 has an outer diameter that varies at the contracted pipe 13.

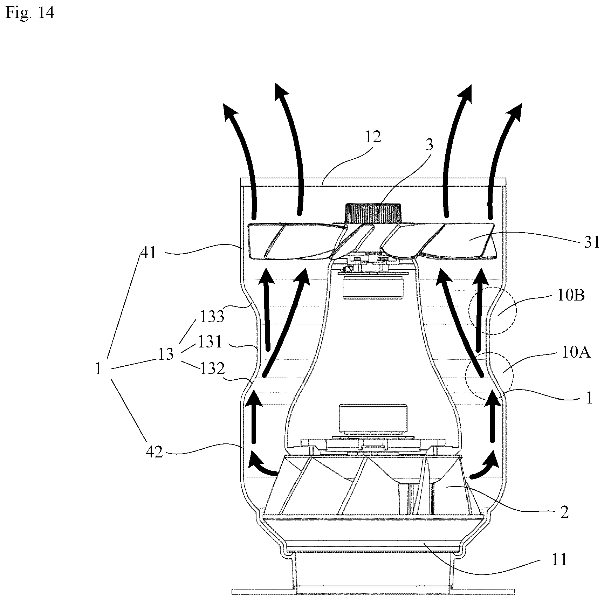

According to embodiments shown in Fig. 14 to Fig. 15, the contracted pipe 13 includes a cylinder 131 located at middle of the contracted pipe 13, the cylinder 131 has one outwardly extending flared end 132 connected to the second normal pipe 42 and another outwardly extending flared end 133 connected to the first the normal pipe 41. An edge 10A at connection of the cylinder 131 and the flared end 132 has an arc-shaped chamfer to form the windward surface, and an edge 10B at connection of cylinder 131 and the flared end 133 may also have an arc-shaped chamfer. In similar to the embodiments shown in Fig. 10 to Fig. 11, the edge 10A, as the windward surface, may guide the air flow from the turbo fan 2 into an air flow 1 and an air flow 2 under the Coanda Effect, and the edge 10B may further guide, under the Coanda Effect, the air flow 2 into an air flow 21 and an air flow 22 fitted respectively for individual portions of the blades 31.

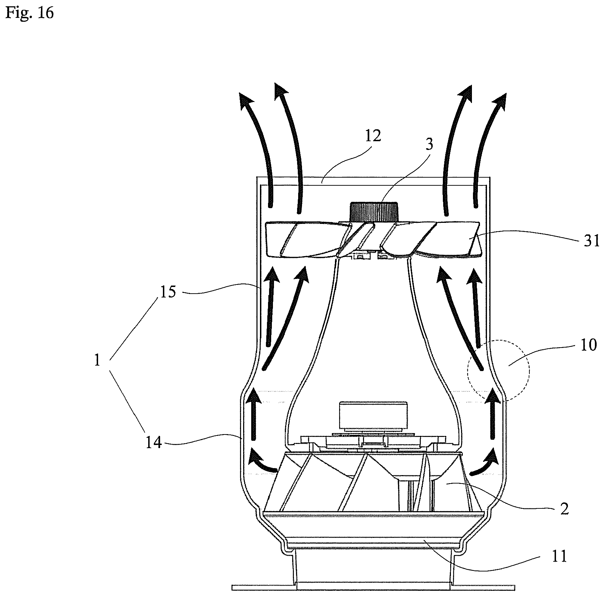

According to another embodiment, the contracted pipe may be located at one side of the normal pipe, and an end of the contracted pipe forms a wind outlet 12. For example, as shown in Fig. 16, the normal pipe 14 may be located at the lower end of the wind tunnel 1, the contracted pipe 15 may be located at the upper end of the wind tunnel 1, and bottom of the contracted pipe 15 is connected to top of the normal pipe 14. Therefore, the flow-spoiler portion 10, which spoils the air flow generated by the turbo fan 2, may be formed at the bottom of the contracted pipe 15 close to the normal pipe 14.

Furthermore, in the embodiments shown in Fig. 4 to Fig. 16, a convex portion or deformation of the flow-spoiler portion 10 may change an inner diameter of the wind tunnel 1, such that a zone of the wind tunnel 1 with a smaller inner diameter may spoil the air flow generated by the turbo fan 2 to be fully fitted for the blades 31 of the axial fan 3. As shown in Fig. 3, assuming that a diameter of the blades 31 of the axial fan 3 is T, and then a distance between an innermost side and an outermost side of the inner wall of the wind tunnel 1 may be t, and (1/6)T≤t≤(1/2)T. Of course, the disclosure is not intended to limit thereto.

Other embodiments of the disclosure will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A wind tunnel (1) for an air purifier, the wind tunnel (1) comprises a turbo fan (2) arranged at a wind inlet (11) of the wind tunnel (1) and an axial fan (3) at a wind outlet (12) of the wind tunnel (1),
wherein a flow-spoiler portion (10) is formed on an inner wall of the wind tunnel (1) between the turbo fan (2) and the axial fan (3),
the flow-spoiler portion (10) spoils an air flow which has been drawn into the wind tunnel (1) by the turbo fan (2), and is blown towards the axial fan (3) along the inner wall of the wind tunnel (1) and then released via the axial fan (3) to generate a Coanda effect, so as to make a portion of the air flow, when blown towards the axial fan (3), to be away from the inner wall of the wind tunnel (1), and another portion of the air flow to continue to proceed along the inner wall of the wind tunnel (1);
wherein the flow-spoiler portion (10) comprises an inward convex portion formed on the inner wall of the wind tunnel (1), the inward convex portion has a boss (100, 103, 104) shape, and the boss (100) comprises a windward surface (100A) towards the turbo fan (2) and having an arc shape,
**characterized in that** the boss (104) comprises a first edge (104A) close to the turbo fan (2) and a second edge (104B) away from the turbo fan (2), each of the first edge (104A) and the second edge (104B) having an arc-shaped chamfer.

2. A wind tunnel (1) for an air purifier, the wind tunnel (1) comprises a turbo fan (2) arranged at a wind inlet (11) of the wind tunnel (1) and an axial fan (3) at a wind outlet (12) of the wind tunnel (1),
wherein a flow-spoiler portion (10) is formed on an inner wall of the wind tunnel (1) between the turbo fan (2) and the axial fan (3),
the flow-spoiler portion (10) spoils an air flow which has been drawn into the wind tunnel (1) by the turbo fan (2), and is blown towards the axial fan (3) along the inner wall of the wind tunnel (1) and then released via the axial fan (3) to generate a Coanda effect, so as to make a portion of the air flow, when blown towards the axial fan (3), to be away from the inner wall of the wind tunnel (1), and another portion of the air flow to continue to proceed along the inner wall of the wind tunnel (1); wherein the wind tunnel (1) comprises a normal pipe and a contracted pipe which has an inner diameter smaller than that of the normal pipe, and the flow-spoiler portion (10) comprises a windward surface (100A) towards the turbo fan (2), the windward surface (100A) being formed in the contracted pipe close to the normal pipe and having an arc-shape, wherein the contracted pipe (13) is arranged between two normal pipes (41, 42), and optionally, an inner wall of the contracted pipe (13) has an inward convex arc-shaped surface,
**characterized in that**, the contracted pipe (13) comprises a cylinder (131) located at middle of the contracted pipe (13), and the cylinder (131) has two outwardly extending flared ends (132, 133) so as to connect to the normal pipes (41, 42) respectively;
wherein each of edges at connections of the cylinder (131) and the flared ends (132, 133) has an arc-shaped chamfer; and
wherein the arc-shaped chamfer close to the turbo fan (2) forms the windward surface (100A), and the flow-spoiler portion (10) further comprises an arc-shaped chamfer away from the turbo fan (2).

3. The wind tunnel (1) according to claim 1 or 2, wherein the wind inlet (11) is located at bottom of the wind tunnel (1), and the wind outlet (12) is located at top of the wind tunnel (1); the flow-spoiler portion (10) is at a higher position than that of the turbo fan (2) such that the air flow blown towards the axial fan (3), after proceeding for at least a preset distance along the inner wall of the wind tunnel (1), is spoiled by the flow-spoiler portion (10).

4. The wind tunnel (1) according to claim 2, wherein a distance between a lowest point of the flow-spoiler portion (10) and the turbo fan (2) is 1/3 to 2/3 of a distance between the turbo fan (2) and the axial fan (3).

5. The wind tunnel (1) according to claim 1 or 2, wherein a distance between an innermost side and an outermost side of the inner wall of the wind tunnel (1) is 1/6 to 1/2 of a diameter of the axial fan (3).

6. An air purifier, comprising the wind tunnel (1) for the air purifier according to any one of claims 1 to 5.

## Patentansprüche

1. Windkanal (1) für einen Luftreiniger, wobei der Windkanal (1) ein Turbogebläse (2), das an einem Windeinlass (11) des Windkanals (1) angeordnet ist, und ein Axialgebläse (3) umfasst, das an einem Windauslass (12) des Windkanals (1) angeordnet ist,
wobei ein Strömungsspoilerabschnitt (10) an einer Innenwand des Windkanals (1) zwischen dem Turbogebläse (2) und dem Axialgebläse (3) ausgebildet ist,
der Strömungsspoilerabschnitt (10) einen Luftstrom ablenkt, der vom Turbogebläse (2) in den Windkanal (1) gesaugt wurde und entlang der Innenwand des Windkanals (1) in Richtung des Axialgebläses (3) geblasen und dann über das Axialgebläse (3) freigesetzt wird, um einen Coand 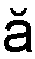 -Effekt zu erzeugen, um zu bewirken, dass ein Teil des Luftstroms, wenn er in Richtung des Axialgebläses (3) geblasen wird, von der Innenwand des Windkanals (1) weg strömt und ein anderer Teil des Luftstroms weiter entlang der Innenwand des Windkanals (1) strömt;
wobei der Strömungsspoilerabschnitt (10) einen nach innen konvexen Abschnitt umfasst, der an der Innenwand des Windkanals (1) ausgebildet ist, wobei der nach innen konvexe Abschnitt die Form eines Buckels (100, 103, 104) aufweist und der Buckel (100) eine windseitige Oberfläche (100A) in Richtung des Turbogebläses (2) umfasst, die eine Bogenform aufweist,
**dadurch gekennzeichnet, dass** der Buckel (104) eine erste Kante (104A) nahe dem Turbogebläse (2) und eine zweite Kante (104B) entfernt vom Turbogebläse (2) umfasst, wobei jede der ersten Kante (104A) und der zweiten Kante (104B) eine bogenförmige Abfasung aufweist.

2. Windkanal (1) für einen Luftreiniger, wobei der Windkanal (1) ein Turbogebläse (2), das an einem Windeinlass (11) des Windkanals (1) angeordnet ist, und ein Axialgebläse (3) umfasst, das an einem Windauslass (12) des Windkanals (1) angeordnet ist,
wobei ein Strömungsspoilerabschnitt (10) an einer Innenwand des Windkanals (1) zwischen dem Turbogebläse (2) und dem Axialgebläse (3) ausgebildet ist,
der Strömungsspoilerabschnitt (10) einen Luftstrom ablenkt, der vom Turbogebläse (2) in den Windkanal (1) gesaugt wurde und entlang der Innenwand des Windkanals (1) in Richtung des Axialgebläses (3) geblasen und dann über das Axialgebläse (3) freigesetzt wird, um einen Coand 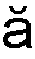 -Effekt zu erzeugen, um zu bewirken, dass ein Teil des Luftstroms, wenn er in Richtung des Axialgebläses (3) geblasen wird, von der Innenwand des Windkanals (1) weg strömt und ein anderer Teil des Luftstroms weiter entlang der Innenwand des Windkanals (1) strömt;
wobei der Windkanal (1) eine normales Rohr und ein verengtes Rohr umfasst, das einen Innendurchmesser aufweist, der kleiner als der des normalen Rohres ist, und der Strömungsspoilerabschnitt (10) eine windseitige Oberfläche (100A) in Richtung des Turbogebläses (2) aufweist, wobei die windseitige Oberfläche (100A) im verengten Rohr nahe dem normalen Rohr ausgebildet ist und eine Bogenform aufweist, wobei das verengte Rohr (13) zwischen zwei normalen Rohren (41, 42) angeordnet ist und optional eine Innenwand des verengten Rohres eine nach innen konvexe biogenförmige Oberfläche aufweist,
**dadurch gekennzeichnet, dass** das verengte Rohr (13) einen Zylinder (131) umfasst, der sich in der Mitte des verengten Rohres (13) befindet, und der Zylinder (131) zwei nach außen verlaufende, aufgeweitete Enden (132, 133) zur Verbindung mit den normalen Rohren (41, 42) aufweist;
wobei jede von Kanten an Verbindungen des Zylinders (131) und der aufgeweiteten Enden (132, 133) eine bogenförmige Abfasung aufweist; und
wobei die bogenförmige Abfasung nahe dem Turbogebläse (2) die windseitige Oberfläche (100A) bildet und der Strömungsspoilerabschnitt (10) ferner eine bogenförmige Abfasung vom Turbogebläse (2) weg bildet.

3. Windkanal (1) nach Anspruch 1 oder 2, wobei der Windeinlass (11) sich am Boden des Windkanals (1) befindet und der Windauslass (12) sich am oberen Ende des Windkanals (1) befindet; wobei der Strömungsspoilerabschnitt (10) in einer Position ist, die höher als die des Turbogebläses (2) ist, sodass der in Richtung des Axialgebläse (3) geblasene Luftstrom nach dem Zurücklegen mindestens einer voreingestellten Distanz entlang der Innenwand des Windkanals (1) durch den Strömungsspoilerabschnitt (10) abgelenkt wird.

4. Windkanal (1) nach Anspruch 2, wobei eine Distanz zwischen einem tiefsten Punkt des Strömungsspoilerabschnitts (10) und dem Turbogebläse (2) 1/3 bis 2/3 einer Distanz zwischen dem Turbogebläse (2) und dem Axialgebläse (3) beträgt.

5. Windkanal (1) nach Anspruch 1 oder 2, wobei eine Distanz zwischen einer innersten Seite und einer äußersten Seite der Innenwand des Windkanals (1) 1/6 bis 1/2 eines Durchmessers des Axialgebläses (3) beträgt.

6. Luftreiniger, umfassend den Windkanal (1) für den Luftreiniger nach einem der Ansprüche 1 bis 5.

## Revendications

1. Dispositif de soufflerie (1) pour un purificateur d'air, le dispositif de soufflerie (1) comprend un turboventilateur (2) agencé au niveau d'une entrée d'air (11) du dispositif de soufflerie (1) et un ventilateur axial (3) au niveau d'une sortie d'air (12) du dispositif de soufflerie (1),
dans lequel une partie déflectrice de flux (10) est formée sur une paroi interne du dispositif de soufflerie (1) entre le turboventilateur (2) et le ventilateur axial (3),
la partie déflectrice de flux (10) dévie un flux d'air qui a été aspiré dans le dispositif de soufflerie (1) par le turboventilateur (2), et est soufflé vers le ventilateur axial (3) le long de la paroi interne du dispositif de soufflerie (1) et puis libéré via le ventilateur axial (3) pour générer un effet Coanda, afin qu'une partie du flux d'air, lorsqu'elle est soufflée vers le ventilateur axial (3), soit à l'écart de la paroi interne du dispositif de soufflerie (1), et qu'une autre partie du flux d'air continue à avancer le long de la paroi interne du dispositif de soufflerie (1) ;
dans lequel la partie déflectrice de flux (10) comprend une partie convexe vers l'intérieur formée sur la paroi interne du dispositif de soufflerie (1), la partie convexe vers l'intérieur a la forme d'un bossage (100, 103, 104), et le bossage (100) comprend une surface exposée au vent (100A) vers le turboventilateur (2) et ayant une forme d'arc,
**caractérisé en ce que** le bossage (104) comprend un premier bord (104A) près du turboventilateur (2) et un deuxième bord (104B) à l'écart du turboventilateur (2), chacun du premier bord (104A) et du deuxième bord (104B) ayant un chanfrein en forme d'arc.

2. Dispositif de soufflerie (1) d'un purificateur d'air, le dispositif de soufflerie (1) comprend un turboventilateur (2) agencé au niveau d'une entrée d'air (11) du dispositif de soufflerie (1) et un ventilateur axial (3) au niveau d'une sortie d'air (12) du dispositif de soufflerie (1),
dans lequel une partie déflectrice de flux (10) est formée sur une paroi interne du dispositif de soufflerie (1) entre le turboventilateur (2) et le ventilateur axial (3),
la partie déflectrice de flux (10) dévie un flux d'air qui a été aspiré dans le dispositif de soufflerie (1) par le turboventilateur (2), et est soufflé vers le ventilateur axial (3) le long de la paroi interne du dispositif de soufflerie (1) et puis libéré via le ventilateur axial (3) pour générer un effet Coanda, afin qu'une partie du flux d'air, lorsqu'elle est soufflée vers le ventilateur axial (3), soit à l'écart de la paroi interne du dispositif de soufflerie (1), et qu'une autre partie du flux d'air continue à avancer le long de la paroi interne du dispositif de soufflerie (1) ;
dans lequel le dispositif de soufflerie (1) comprend un tuyau normal et un tuyau contracté qui a un diamètre interne inférieur à celui du tuyau normal, et la partie déflectrice de flux (10) comprend une surface exposée au vent (100A) vers le turboventilateur (2), la surface exposée au vent (100A) étant formée dans le tuyau contracté près du tuyau normal et ayant une forme d'arc, dans lequel le tuyau contracté (13) est agencé entre deux tuyaux normaux (41, 42), et éventuellement, une paroi interne du tuyau contracté (13) a une surface en forme d'arc convexe vers l'intérieur,
**caractérisé en ce que**, le tuyau contracté (13) comprend un cylindre (131) situé au centre du tuyau contracté (13), et le cylindre (131) a deux extrémités évasées s'étendant vers l'extérieur (132, 133) afin de se raccorder respectivement aux tuyaux normaux (41, 42) ;
dans lequel chacun des bords au niveau des raccords du cylindre (131) et des extrémités évasées (132, 133) a un chanfrein en forme d'arc ; et
dans lequel le chanfrein en forme d'arc près du turboventilateur (2) forme la surface exposée au vent (100A), et la partie déflectrice de flux (10) comprend en outre un chanfrein en forme d'arc à l'écart du turboventilateur (2).

3. Dispositif de soufflerie (1) selon la revendication 1 ou 2, dans lequel l'entrée d'air (11) est située au niveau de la partie inférieure du dispositif de soufflerie (1), et la sortie d'air (12) est située au niveau de la partie supérieure du dispositif de soufflerie (1) ; la partie déflectrice de flux (10) est à une position plus élevée que celle du turboventilateur (2) de sorte que le flux d'air soufflé vers le ventilateur axial (3), après avancement sur une distance prédéfinie le long de la paroi interne du dispositif de soufflerie (1), est dévié par la partie déflectrice de flux (10).

4. Dispositif de soufflerie (1) selon la revendication 2, dans lequel une distance entre un point le plus bas de la partie déflectrice de flux (10) et le turboventilateur (2) est de 1/3 à 2/3 d'une distance entre le turboventilateur (2) et le ventilateur axial (3).

5. Dispositif de soufflerie (1) selon la revendication 1 ou 2, dans lequel une distance entre un côté le plus à l'intérieur et un côté le plus à l'extérieur de la paroi interne du dispositif de soufflerie (1) est de 1/6 à 1/2 d'un diamètre du ventilateur axial (3).

6. Purificateur d'air, comprenant le dispositif de soufflerie (1) pour purificateur d'air selon l'une quelconque des revendications 1 à 5.
